# EUROPEAN PATENT APPLICATION

(11) **EP 4 650 213 A1**
(43) Date of publication of application: **19.11.2025**
(21) Application number: 24175961.2
(22) Date of filing: 15.05.2024
(51) Int. Cl.: B60L 53/16, B60L 53/302, H01R 13/00

(54) **LIQUID-COOLED CHARGING CONNECTOR**

(71) Applicant: K.S. Terminals Inc., 507 Xianxi Township (TW)
(72) Inventor: YANG, MIN CHIH, Changhua County (TW)
(74) Representative: Straus, Alexander

(57) **Abstract**

A liquid-cooled charging connector for insertion into the charging port of an electric vehicle comprises a connector body and a connector head. The connector head is secured to the front end of the connector body by multiple screws. The connector body houses two cooling assemblies, each cooling assembly connected to a power terminal. By employing a one-to-one configuration, the cooling assemblies can effectively reduce the operating temperature of the charging connector. The front end of the connector body has a terminal mounting portion with two power terminals and a charging terminal assembly mounted thereon. Each power terminal is secured to the terminal mounting portion by at least one screw. In this way, when the power terminal is damaged, it can be directly replaced by removing the screws to detach the connector head, thereby facilitating maintenance and reducing maintenance costs.

## Description

### FIELD OF INVENTION

The present disclosure relates to a charging connector, in particular a liquid-cooled charging connector.

### BACKGROUND OF THE INVENTION

Typically, DC charging stations are often deployed at public charging stations to enable quick charging of electric vehicles. Despite their quick-charging capability, DC stations not only require a significant amount of instantaneous power supply, which increases the cost of construction, but the ultra-fast charging current of more than 400A generates a considerable amount of waste heat as it travels through the conductor, which could result in reduced charging efficiency and current due to increased temperatures. In addition, to safely accommodate the use of ultra-high currents, the charging connector must use a thicker and heavier cable, which also reduces user comfort during operation.

Moreover, the terminal of the charging connectors installed in public areas are susceptible to damage due to frequent use by various users, which requires the replacement of the entire connector and consequently escalating maintenance costs.

### SUMMARY OF THE INVENTION

Based on the above deficiencies, the purpose of the present disclosure is to provide a charging connector, in particular a liquid-cooled charging connector.

According to the purpose of the present disclosure, the liquid-cooled charging connector is provided, comprising: a connector body having two power terminals and a charging terminal assembly which are mounted on a terminal mounting portion at the front end of the connector body, wherein the two power terminals are detachably arranged; two cooling assemblies disposed within the connector body, the front ends of the two cooling assemblies being respectively connected to the two power terminals, each cooling assembly including an inlet hose and an outlet pipe; and a connector head detachably mounted on the connector body.

The connector head has a power terminal connection portion and a charging terminal connection portion, the power terminal connection portion having insertion portions corresponding to the two power terminals, and the charging terminal connection portion also having insertion portions corresponding to the charging terminal assembly.

In each cooling assembly, the inlet hose is positioned below the outlet pipe.

Each power terminal comprises a mating portion and a conductor connection portion, the outer wall surface of the conductor connection portion having a coupling head for connecting to the outlet pipe, and the rear end of the conductor connection portion being connected to the inlet hose.

The conductor connection portion has a cooling chamber formed therein, and the inlet hose has a cooling fluid passage communicating with the cooling chamber.

The inlet hose further comprises a conductor, with a portion of the conductor being positioned within the cooling fluid passage and another portion being positioned within the cooling chamber.

The connector head is positioned on the connector body by at least one fastener.

The conductor connection portion of each power terminal is located within the connector body, with the mating portion protruding from the terminal mounting portion and being positioned on the conductor connection portion by a fastener.

The charging terminal assembly includes a charging terminal and multiple grounding terminals, with the charging terminal being connected to a charging cable.

### BRIEF DESCRIPTION OF THE DRAWINGS

FIG. 1 is an exploded view of the components in an embodiment of the present disclosure.
FIG. 2 is a schematic view of the cooling assemblies within the connector body in an embodiment of the present disclosure.
FIG. 3 is a schematic view illustrating the flow direction of the cooling fluid in an embodiment of the present disclosure.

### DETAILED DESCRIPTION OF THE PREFERRED EMBODIMENTS

In order to clearly explain the specific embodiments, structures, and effects achieved by the present disclosure, the following embodiments are provided with accompanying drawings:

The directional descriptions of "front," "rear," "up," "down," "left," and "right" mentioned in this text are for convenience of understanding and do not limit the present disclosure to these directions, as they can be adjusted according to actual circumstances. In the present disclosure, the front and rear directions are based on the insertion and removal directions of the charging connector.

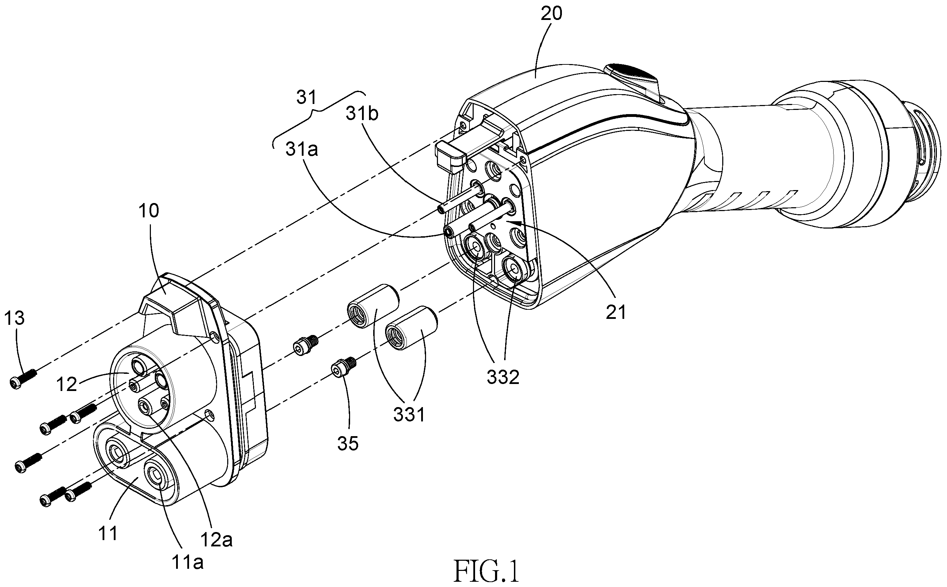

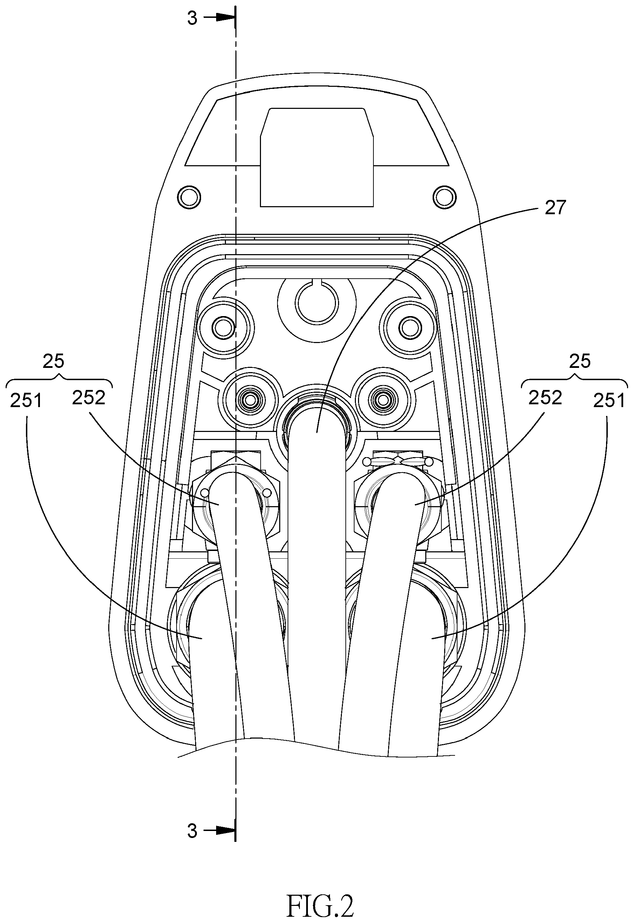

Referring to FIGS. 1 and 2, a liquid-cooled charging connector for insertion into a charging port of an electric vehicle is illustrated, comprising a connector body 20 and a connector head 10. The connector head 10 is secured to the front end of the connector body 20 by multiple fasteners 13. The connector body 20 houses two cooling assemblies 25, each including an inlet hose 251 and an outlet pipe 252 provided to reduce the operating temperature of the charging connector. In the embodiment of the present disclosure, the fasteners 13 are screws.

Further, two power terminals 33 and a charging terminal assembly 31 are mounted on the terminal mounting portion 21 at the front end of the connector body 20. The connector head 10 has a power terminal connection portion 11 and a charging terminal connection portion 12, the power terminal connection portion 11 having insertion portions 11a corresponding to the two power terminals 33, and the charging terminal connection portion 12 also having insertion portions 12a corresponding to the charging terminal assembly 31, thereby allowing the connector head 10 to supply power to the electric vehicle after being inserted into the charging port of the vehicle. Wherein, the charging terminal assembly 31 includes a charging terminal 31a and multiple grounding terminals 31b, with the rear end of the charging terminal 31a being connected to a charging cable 27.

The two power terminals 33 are positive and negative terminals, respectively. Each power terminal 33 includes a mating portion 331 and a conductor connection portion 332, wherein the conductor connection portion 332 is located within the connector body 20, and the mating portion 331 protrudes from the terminal mounting portion 21 for connection to the charging port of the electric vehicle. The mating portion 331 is secured to the conductor connection portion 332 by at least one fastener 35. In the embodiment of the present disclosure, the fastener 35 is a screw. In this way, when the power terminal 33 is damaged, it can be replaced by removing the screws to detach the connector head and then removing the screws to facilitate the replacement of the mating portion 331 of the new power terminal 33, thereby improving maintenance convenience and reducing maintenance costs.

Furthermore, each conductor connection portion 332 of the power terminals 33 has a coupling head 34 on its outer wall surface for connecting to the outlet pipe 252, and the rear end of the conductor connection portion 332 is connected to the inlet hose 251. The conductor connection portion 332 has a cooling chamber 332a formed therein, and the inlet hose 251 has a cooling fluid passage 251a communicating with the cooling chamber 332a. Wherein, the inlet hose 251 also includes a conductor 36, with a portion of the conductor 36 being positioned within the cooling fluid passage 251a and another portion protruding from the cooling fluid passage 251a. When the inlet hose 251 and the conductor 36 are connected, the portion of the conductor 36 protruding from the cooling fluid passage 251a is positioned within the cooling chamber 332a.

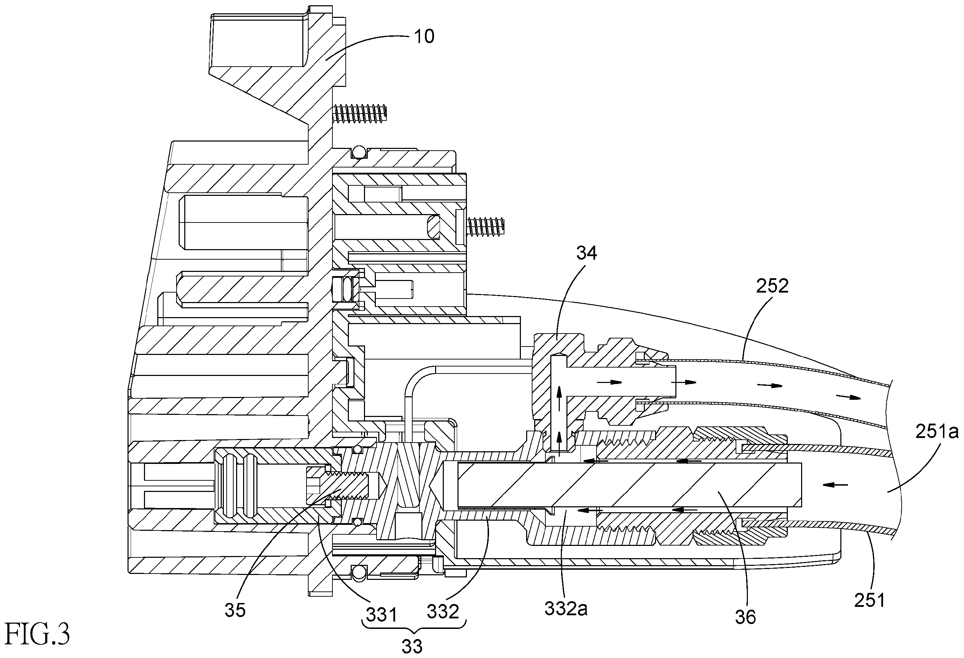

In the embodiment of the present disclosure, the inlet hose 251 of each cooling assembly 25 is positioned below the outlet pipe 252. The rear ends of the inlet hose 251 and the outlet pipe 252 are connected to a cooler (not shown) via quick couplings. The cooler provides cooling fluid, and the direction of flow of the cooling fluid is shown in FIG. 3. The cooling fluid enters the cooling fluid passage 251a of the inlet hose 251 from the cooler and flows into the cooling chamber 332a. The cooling fluid removes the heat generated by the conductor 36 located in the cooling chamber 332a and returns to the cooler through the outlet pipe 252. By continuously circulating the cooling fluid to dissipate the waste heat, a cooling effect is achieved.

In the embodiment of the present disclosure, the rear end of the connector body 20 has an integrated assembly that integrates the two cooling assemblies 25 and the charging cable 27 and encloses them within a single cable. In this liquid-cooled charging connector, each cooling assembly 25 within the connector body 20 corresponds to a power terminal 33, utilizing a one-to-one configuration for effective heat dissipation from the power terminals 33 and the conductor 36. This improves heat dissipation efficiency and allows for a smaller cable diameter and reduced cable weight, which enhances user comfort during operation.

Additionally, by incorporating detachable connector heads 10 and power terminals 33, maintenance convenience is improved, allowing users to replace individual components and reduce maintenance costs.

## Claims

1. A liquid-cooled charging connector, comprising:
a connector body (20), having two power terminals (33) and a charging terminal assembly (31)which are mounted on a terminal mounting portion (21) at the front end of the connector body (20), wherein the two power terminals (33) are detachably arranged;
two cooling assemblies (25), disposed within the connector body (20), the front ends of the two cooling assemblies (25) being respectively connected to the two power terminals (33), each cooling assembly (25) including an inlet hose (251) and an outlet pipe (252); and
a connector head (10), detachably mounted on the connector body (20).

2. The liquid-cooled charging connector according to Claim 1, wherein the connector head (10) has a power terminal connection portion (11) and a charging terminal connection portion (12), the power terminal connection (11) portion having insertion portions (11a) corresponding to the two power terminals (33), and the charging terminal connection (12) portion also having insertion portions (12a) corresponding to the charging terminal assembly (31).

3. The liquid-cooled charging connector according to Claim 1, wherein in each cooling assembly (25), the inlet hose (251) is positioned below the outlet pipe (252).

4. The liquid-cooled charging connector according to Claim 1, wherein each power terminal (33) comprises a mating portion (331) and a conductor connection portion (332), the outer wall surface of the conductor connection portion (332) having a coupling head (34) for connecting to the outlet pipe (252), and the rear end of the conductor connection portion (332) being connected to the inlet hose (251).

5. The liquid-cooled charging connector according to Claim 4, wherein the conductor connection portion (332) has a cooling chamber (332a) formed therein, and the inlet hose (251) has a cooling fluid passage (251a) communicating with the cooling chamber (332a).

6. The liquid-cooled charging connector according to Claim 5, wherein the inlet hose (251) further comprises a conductor(36), with a portion of the conductor (36) being positioned within the cooling fluid passage (251a) and another portion being positioned within the cooling chamber (332a).

7. The liquid-cooled charging connector according to Claim 1, wherein the connector head (10) is positioned on the connector body (20) by at least one fastener (13).

8. The liquid-cooled charging connector according to Claim 4, wherein the conductor connection portion (332) of each power terminal (33) is located within the connector body (20), with the mating portion (331) protruding from the terminal mounting portion (21), and the mating portion (331) is positioned on the conductor connection portion (332) by a fastener (35).

9. The liquid-cooled charging connector according to Claim 1, wherein the charging terminal assembly (31) includes a charging terminal (31a) and multiple grounding terminals (31b), and the charging terminal (31a) is connected to a charging cable (27).
